# EUROPÄISCHE PATENTANMELDUNG

(11) **EP 4 418 486 A1**
(43) Veröffentlichungstag der Anmeldung: **21.08.2024**
(21) Anmeldenummer: 23157304.9
(22) Anmeldetag: 17.02.2023
(51) Int. Cl.: H02J 3/38, H02J 13/00

(54) **VERFAHREN ZUR ENERGIEVERSORGUNG IN EINEM LOKALEN ENERGIEVERSORGUNGSNETZ**

(71) Anmelder: FRONIUS INTERNATIONAL GmbH, 4643 Pettenbach (AT)
(72) Erfinder: SCHEDLBERGER, Johannes, 4643 Pettenbach (AT); GUSCHLBAUER, Florian, 4643 Pettenbach (AT); PFAFFENBICHLER, Dominik, 4643 Pettenbach (AT); MÜHLEGGER, Johannes, 4643 Pettenbach (AT)
(74) Vertreter: SONN Patentanwälte GmbH & Co KG

(57) **Zusammenfassung**

Verfahren zur Energieversorgung in einem Energieversorgungsnetz (1), welches mit einem übergeordneten Energieversorgungsnetz (4) verbindbar ist, wobei zumindest einer der Teilnehmer (6a) eine Energieversorgungseinrichtung (9) mit einem Wechselrichter (10a, 10b) aufweist:
i) Trennen des Energieversorgungsnetzes (1) von dem übergeordneten Energieversorgungsnetz (4);
ii) Trennen sämtlicher Teilnehmer (6a, 6b) von dem Energieversorgungsnetz (1);
iii) Bestimmen eines Master-Wechselrichters (10a) und eines Slave-Wechselrichters (10b);
iv) Verbinden der Teilnehmer (6a) mit Energieversorgungseinrichtungen (9) mit dem Energieversorgungsnetz (1);
v) Ausgeben einer Wechselspannung (U) durch den Master-Wechselrichter (10a) und den Slave-Wechselrichter (10b), wobei die Frequenz (f), Spannungshöhe (A) und Phasenlage (ϕ) durch den Master-Wechselrichter (10a) vorgegeben wird;
vi) Bestimmen der in dem Energieversorgungsnetz (1) zur Verfügung stehenden Gesamtenergie (E_{ges}) und/oder der abrufbaren Gesamtleistung (P_{ges});
vii) Verbinden eines Teilnehmers (6b) ohne Energieversorgungseinrichtung (9) mit dem lokalen Energieversorgungsnetz (1) in Abhängigkeit der Gesamtenergie (E_{ges}), der Gesamtleistung (P_{ges}), der erwarteten Verbrauchsleistung (P_{E}) und/oder des erwarteten Energiebedarfs (E_{E});
viii) Bedarfsweises Trennen von Teilnehmern (6a, 6b) von dem Energieversorgungsnetz (1), um die Netzstabilität zu gewährleisten.

## Beschreibung

Die Erfindung betrifft ein Verfahren zur Energieversorgung in einem lokalen Energieversorgungsnetz, insbesondere nach einem Stromausfall.

Die zunehmende Einspeisung elektrischer Energie aus erneuerbaren Energiequellen in die Energieversorgungsnetze stellt die Netzbetreiber und Energieversorger vor große Herausforderungen, da die Einspeiseleistungen und die zur Verfügung stehenden Energiemengen aus diesen Energiequellen, insbesondere aus Wind- und Solarkraftanlagen, typischerweise zeitlichen Schwankungen unterliegen. Zum Ausgleich dieser Schwankungen müssen Speichermöglichkeiten bereitgestellt werden, die zu einem Zeitpunkt anfallende Überschussenergie speichern und bei Bedarf zu einem anderen Zeitpunkt wieder abgeben können. Aufgrund der meist dezentralen Energieeinspeisung und den Schwankungen der eingespeisten elektrischen Energie kann die Netzstabilität beeinträchtigt werden und die Wahrscheinlichkeit von Stromausfällen zunehmen.

Immer mehr Haushalte verfügen über erneuerbare Energiequellen, wie zum Beispiel Photovoltaikanlagen oder kleinere Wind- oder Wasserkraftanlagen, sowie entsprechende elektrische Energiespeicher zur Speicherung elektrischer (Überschuss-)Energie. Im Falle eines Stromausfalles können sich diese Haushalte selbst mit der gespeicherten elektrischen Energie versorgen. Haushalte ohne Energiespeicher bleiben hingegen während eines Stromausfalls ohne Energieversorgung. Es wäre daher wünschenswert, auch Haushalte ohne Energiespeicher im Falle eines Stromausfalls mit Energie versorgen zu können.

Aus dem Stand der Technik sind Verfahren bekannt, mit denen die Energieversorgung nach einem Stromausfall zumindest lokal wiederhergestellt werden kann. Damit ein (erneutes) Zusammenbrechen der aufgebauten Energieversorgung verhindert wird, darf die Verbrauchsleistung und die benötigte Energie nicht größer sein als die abrufbare Leistung bzw. die verfügbare Energie. In Marchgraber, Jürgen, and Wolfgang Gawlik. 2020. "Investigation of Black-Starting and Islanding Capabilities of a Battery Energy Storage System Supplying a Microgrid Consisting of Wind Turbines, Impedance- and Motor-Loads" Energies 13, no. 19: 5170. published: 5. October 2020 wird ein Verfahren beschrieben, bei dem die Zu- und Abschaltung von Teilnehmern bzw. Verbrauchern auf Basis der elektrischen Spannung und der Frequenz erfolgt. Sinkt beispielsweise die Frequenz, werden Verbraucher durch Deaktivieren von elektrischen Schaltern vom Energieversorgungsnetz getrennt. Ein Absinken der Frequenz ist ein Indikator dafür, dass die momentan verbrauchte Energie bzw. benötigte Leistung größer ist als die zur Verfügung stehende Energie bzw. Leistung.

Aus US,424,933 B2 ist ein Verfahren bekannt, das elektrische Verbraucher eines Teilnehmers je nach verfügbarer Energie zu- oder abschaltet. Die Versorgung anderer Teilnehmer bzw. Haushalte geht daraus nicht hervor.

Im Lichte dieser Ausführungen ist es Aufgabe der vorliegenden Erfindung, die Nachteile des Standes der Technik zu lindern oder gar gänzlich zu vermeiden. Vorzugsweise ist es Aufgabe der vorliegenden Erfindung, ein Verfahren zur Verfügung zu stellen, mit dem auch Teilnehmer eines lokalen Energieversorgungsnetzes, die keinen eigenen Energiespeicher besitzen, nach einem Stromausfall mit elektrischer Energie versorgt werden können.

Gelöst wird diese Aufgabe durch ein Verfahren nach Anspruch 1. Bevorzugte Ausführungsformen sind in den abhängigen Ansprüchen angegeben.

Erfindungsgemäß ist ein Verfahren zur Energieversorgung in einem lokalen Energieversorgungsnetz, insbesondere nach einem Stromausfall, vorgesehen, wobei das lokale Energieversorgungsnetz über einen Verbindungspunkt mit einem übergeordneten Energieversorgungsnetz verbindbar ist und mehrere Teilnehmer, insbesondere Haushalte, miteinander verbindet, wobei zumindest einer der Teilnehmer eine Energieversorgungseinrichtung mit einem Wechselrichter zur Einspeisung in das lokale Energieversorgungsnetz aufweist und das Verfahren die folgenden Schritte aufweist:
i) Trennen des lokalen Energieversorgungsnetzes von dem übergeordneten Energieversorgungsnetz mit Hilfe eines elektrischen Schalters in dem Verbindungspunkt;
ii) Trennen sämtlicher Teilnehmer von dem lokalen Energieversorgungsnetz mit Hilfe von weiteren Schaltern, die sich jeweils bei den Teilnehmern befinden;
iii) Bestimmen eines Master-Wechselrichters und zumindest eines Slave-Wechselrichters unter den Teilnehmern mit Energieversorgungseinrichtung, wenn mehrere Teilnehmer mit jeweils einer Energieversorgungseinrichtung vorhanden sind; andernfalls Festlegen des Wechselrichters des einzigen Teilnehmers mit Energieversorgungseinrichtung als Master-Wechselrichter;
iv) Verbinden jener Teilnehmer, die Energieversorgungseinrichtungen aufweisen, mit dem lokalen Energieversorgungsnetz über die jeweiligen weiteren Schalter, sodass eine Einspeisung des Master-Wechselrichters und, falls vorhanden, der zumindest eine Slave-Wechselrichter in das lokale Energieversorgungsnetz ermöglicht wird;
v) Ausgeben einer Wechselspannung durch den Master-Wechselrichter und, falls vorhanden, den zumindest einen Slave-Wechselrichter, wobei die Frequenz, Spannungshöhe und Phasenlage der Wechselspannung durch den Master-Wechselrichter vorgegeben wird;
vi) Bestimmen der durch die zumindest eine Energieversorgungseinrichtung in dem lokalen Energieversorgungsnetz zur Verfügung stehende Gesamtenergie und/oder der abrufbaren elektrischen Gesamtleistung;
vii) Verbinden von zumindest eines Teilnehmers ohne Energieversorgungseinrichtung zur Netzeinspeisung mit dem lokalen Energieversorgungsnetz vorzugsweise nach Schritt v) in Abhängigkeit zumindest der zur Verfügung stehenden Gesamtenergie, der abrufbaren elektrischen Gesamtleistung, der erwarteten Verbrauchsleistung des zumindest einen Teilnehmers ohne Energieversorgungseinrichtung und/oder des erwarteten Energiebedarfs der zumindest einen Teilnehmers ohne Energieversorgungseinrichtung;
viii) Bedarfsweises Trennen von Teilnehmern, insbesondere von Teilnehmern ohne Energieversorgungseinrichtung, von dem lokalen Energieversorgungsnetz, sodass die Netzstabilität des lokalen Energieversorgungsnetzes aufrechterhalten wird.

Mit dem erfindungsgemäßen Verfahren können auch Teilnehmer ohne eigenen Energiespeicher bei einem Stromausfall in einem Energieversorgungsnetz, insbesondere bei einem Stromausfall in einem übergeordneten Energieversorgungsnetz, mit elektrischer Energie versorgt werden. Bei dem erfindungsgemäßen Verfahren werden Teilnehmer auf Basis zumindest der zur Verfügung stehenden Gesamtenergie, der abrufbaren elektrischen Gesamtleistung, der erwarteten Verbrauchsleistung der Teilnehmer und/oder des erwarteten Energiebedarfs der Teilnehmer verbunden. Die Gesamtenergie und die abrufbare elektrische Gesamtleistung beziehen sich auf die gesamte zur Verfügung stehende Energie der an das lokale Energieversorgungsnetz angeschlossenen Teilenehmer bzw. die gesamte abrufbare elektrische Leistung der an das lokale Energieversorgungsnetz angeschlossenen Teilenehmer. Teilnehmer, die die Netzstabilität aufgrund eines zu hohen erwarteten Energiebedarfs oder einer zu hohen erwarteten Verbrauchsleistung negativ beeinflussen würden, werden nicht mit dem lokalen Energieversorgungsnetz verbunden, sodass ein erneuter Zusammenbruch der Energieversorgung vermieden wird. Im Unterschied zum Stand der Technik erfolgt die Verbindung und Trennung der Teilnehmer von dem lokalen Energieversorgungsnetz daher nicht auf Basis des Spannungsverlaufs und der Frequenz der Spannung. Wenn der tatsächliche Energiebedarf oder Verbrauchsleistungsbedarf eines Teilnehmers zu hoch ist und er damit das lokale Energieversorgungsnetz zu stark belasten würde, wird der Teilnehmer von dem lokalen Energieversorgungsnetz getrennt oder gar nicht erst verbunden. Bei dem lokalen Energieversorgungsnetz kann es sich beispielsweise um ein Niederspannungsnetz oder einen Teil eines Niederspannungsnetzes handeln. Niederspannungsnetze werden im Normalbetrieb typischerweise mit einer Netzspannung von 400 V Außenleiterspannung (Effektivwert) betrieben. Ein Niederspannungsnetz kann über einen Verbindungspunkt, beispielsweise einem Transformator, mit einem übergeordneten Energieversorgungsnetz, zum Beispiel einem Mittelspannungsnetz, verbunden sein. Der Verbindungspunkt kann durch einen Transformator gebildet sein oder einen Transformator aufweisen. Ein Mittelspannungsnetz weist typischerweise eine Spannung von zumindest 1 000 V Außenleiterspannung (Effektivwert) auf. Ein lokales Energieversorgungsnetz kann eine geografische Ausdehnung von beispielsweise zumindest 100 m, zumindest 500 m, zumindest 1 km, zumindest 3 km oder zumindest 5 km aufweisen. Beispielsweise kann die geografische Ausdehnung zwischen dem Verbindungspunkt und einem Teilnehmer zumindest 100m, zumindest 500 m, zumindest 1 km, zumindest 3 km oder zumindest 5 km betragen. An das lokale Energieversorgungsnetz können mehrere Teilnehmer angeschlossen sein. Die Teilnehmer können organisatorisch getrennte Einheiten darstellen. Einzelne Teilnehmer können beispielsweise durch einen Haushalt oder ein eigenes Gebäude gebildet sein. Jeder Teilnehmer kann einen eigenen Stromanschlusspunkt, insbesondere einen Gebäudeanschluss, zur Verbindung mit dem lokalen Energieversorgungsnetz aufweisen. Zumindest einer der Teilnehmer besitzt eine Energieversorgungseinrichtung, die auch eine Energieerzeugungseinrichtung wie beispielsweise eine Photovoltaik-Anlage, eine Windkraftanlage, eine Wasserkraftanlage oder eine andere Einrichtung zur Erzeugung elektrische Energie aufweisen kann. Günstig ist, wenn die Energieversorgungseinrichtung einen elektrischen Energiespeicher zur Speicherung elektrischer Energie, beispielsweise einen Heimspeicher, aufweist. Dadurch kann Überschussenergie gespeichert und zu einem späteren Zeitpunkt wieder abgegeben werden. Die Energieversorgungseinrichtung im Sinne der Erfindung weist weiters einen Wechselrichter auf, der Gleichspannung in eine Wechselspannung umwandeln kann. Der Wechselrichter ist unter anderem dazu ausgebildet, in das lokale Energieversorgungsnetz einzuspeisen. Das erfindungsgemäße Verfahren sieht insbesondere im Falle eines Stromausfalls in dem übergeordneten Energieversorgungsnetz die folgenden Schritte vor:
In Schritt i) wird das lokale Energieversorgungsnetz mithilfe eines oder mehrerer elektrischer Schalter von dem übergeordneten Energieversorgungsnetz getrennt. Der bzw. die Schalter können Schalterelemente für jeden Außenleiter des lokalen Energieversorgungsnetzes aufweisen. Der oder die elektrischen Schalter können in dem Verbindungspunkt oder in der Nähe des Verbindungspunktes, beispielsweise in einem Transformatorgebäude, angeordnet sein. Der oder die elektrischen Schalter können beispielsweise durch Trennschalter oder Lasttrennschalter etc. gebildet sein. In Schritt ii) werden sämtliche Teilnehmer von dem lokalen Energieversorgungsnetz mit Hilfe von weiteren Schaltern, die sich jeweils bei den Teilnehmern befinden, getrennt. Die weiteren Schalter können jeweils in einem Smart-Meter integriert sein oder jeweils von einem Smart-Meter gesteuert werden. Die weiteren Schalter können beispielsweise einen Gebäudeanschluss der Teilnehmer bilden. In Schritt iii) werden ein Master-Wechselrichter und zumindest ein Slave-Wechselrichter unter den Teilnehmern mit Energieversorgungseinrichtung bestimmt, wenn mehrere Teilnehmer mit einer Energieversorgungseinrichtung vorhanden sind; andernfalls wird der Wechselrichter des einzigen Teilnehmers mit Energieversorgungseinrichtung als Master-Wechselrichter festgelegt. Bevorzugt wird jener Wechselrichter als Master-Wechselrichter bestimmt, der zu der Energieversorgungseinrichtung mit der meisten gespeicherten Energie und/oder der größten abrufbaren elektrischen Leistung, die zur Verfügung gestellt werden kann, gehört. Schritt iii) kann auch vor oder während der Schritte i) und ii) erfolgen. Insbesondere kann Schritt iii) bereits im Normalbetrieb des lokalen Energieversorgungsnetzes vorgenommen werden, sodass bei einem Stromausfall bereits ein Master-Wechselrichter feststeht. In Schritt iv) werden jene Teilnehmer, die Energieversorgungseinrichtungen aufweisen, mit dem lokalen Energieversorgungsnetz über die jeweiligen weiteren Schalter verbunden, sodass eine Einspeisung durch den Master-Wechselrichter und, falls vorhanden, der zumindest eine Slave-Wechselrichter in das lokale Energieversorgungsnetz ermöglicht wird. Dabei kann vorgesehen sein, dass nur Teilnehmer mit hoher Relevanz verbunden werden. Teilnehmer niedriger Relevanz können vom Energieversorgungsnetz getrennt werden bzw. getrennt bleiben. Schritt iv) kann beispielsweise auch gleichzeitig mit Schritt v) erfolgen. Die Verbindung der Teilnehmer mit Energieversorgungseinrichtungen kann nacheinander erfolgen. In Schritt v) wird eine Wechselspannung durch den Master-Wechselrichter und, falls vorhanden, des zumindest einen Slave-Wechselrichters ausgegeben, wobei die Frequenz, Spannungshöhe und Phasenlage der Wechselspannung durch den Master-Wechselrichter vorgegeben wird. Wie bereits erwähnt, kann die Zuschaltung der Teilnehmer mit Energieversorgungseinrichtungen und damit der Wechselrichter nacheinander erfolgen. Der Master-Wechselrichter kann eine Spannungshöhe, insbesondere eine Amplitude, eine Frequenz und eine Phasenlage einer Wechselspannung für den zumindest einen Slave-Wechselrichter vorgeben, mit der in das lokale Energieversorgungsnetz eingespeist wird. Der zumindest eine Slave-Wechselrichter übernimmt die Vorgaben des Master-Wechselrichters und speist mit einer Wechselspannung mit jener Spannungshöhe, jener Frequenz und jener Phasenlage ein, die vom Master-Wechselrichter vorgegeben wird. Der Master-Wechselrichter kann daher auch als Lead bezeichnet werden. Die Wechselrichter können bei einer Ausführungsform über eine drahtlose oder drahtgebundene Kommunikationsverbindung miteinander kommunizieren. Die Kommunikationsverbindung zwischen den Wechselrichtern kann beispielsweise über die Außenleiter des lokalen Energieversorgungsnetzes (Powerline-Communication) oder über einen von dem lokalen Energieversorgungsnetz separaten drahtlosen oder drahtgebundenen Kommunikationskanal erfolgen. Bei einer alternativen Ausführungsform kann der zumindest eine Slave-Wechselrichter die vom Master-Wechselrichter eingespeiste Wechselspannung messen und daraus die Spannungshöhe, Frequenz und Phasenlage erfassen, woraufhin der zumindest eine Slave-Wechselrichter ebenfalls eine Wechselspannung mit der erfassten Spannungshöhe, Frequenz und Phasenlage ausgeben kann. Eine separate Datenleitung ist in diesem Fall nicht erforderlich. Wenn der Aufbau der Energieversorgung mit dem zuvor bestimmten Master-Wechselrichter erfolglos ist, kann, wenn mehrere Teilnehmer Energieversorgungseinrichtungen aufweisen, ein anderer Wechselrichter als Master-Wechselrichter bestimmt werden. Durch das Ausgeben der Wechselspannung in Schritt v) und das Verbinden in Schritt iv) wird ein Inselnetz aufgebaut, das von den Teilnehmern mit Energieversorgungseinrichtungen betrieben wird. In Schritt vi) werden die durch die zumindest eine Energieversorgungseinrichtung in dem lokalen Energieversorgungsnetz zur Verfügung stehende Gesamtenergie und/oder die durch die zumindest eine Energieversorgungseinrichtung abrufbare elektrische Gesamtleistung bestimmt. Schritt vi) kann auch geleichzeitig oder vor den anderen Schritten i)-v) erfolgen. Auch Schritt vi) kann vor einem Stromausfall vorgenommen werden, sodass im Falle eines Stromausfalls bereits Kenntnisse über die Gesamtleistung und/oder die abrufbare Gesamtleistung zur Verfügung stehen. Die Bestimmung der zur Verfügung stehenden Gesamtenergie und der abrufbaren Gesamtleistung kann durch eine Erfassung der in der zumindest einen Energieversorgungseinrichtung, insbesondere in einem Energiespeicher der Energieversorgungseinrichtung, bevorrateten elektrischen Energie, durch Erfassung der momentan durch allfällige Energieerzeugungseinrichtung erzeugten Energie oder Erzeugerleistung und/oder durch Prognose der künftig durch allfällige Energieerzeugungseinrichtung erzeugten Energie oder Erzeugerleistung erfolgen. Die abrufbare Gesamtleistung kann von der Einspeiseleistung der Energieversorgungseinrichtung, insbesondere der Wechselrichter, abhängen. Die künftig durch allfällige Energieerzeugungseinrichtung erzeugte Energie und die Erzeugerleistung können von der Uhrzeit, der Jahreszeit und dem Wetter abhängen und vorzugsweise auf statistischen Daten basieren. Uhrzeit, Jahreszeit und Wetter können daher bei der Prognose der Gesamtenergie und der Gesamtleistung berücksichtigt werden. Vorzugsweise nach dem Verbinden jener Teilnehmer, die Energieversorgungseinrichtungen aufweisen werden in Schritt vii) die Teilnehmer ohne Energieversorgungseinrichtung mit dem lokalen Energieversorgungsnetz in Abhängigkeit zumindest der zur Verfügung stehenden Gesamtenergie, der abrufbaren elektrischen Gesamtleistung, der erwarteten Verbrauchsleistungen der Teilnehmer und/oder der erwarteten Energiebedarfe der Teilnehmer verbunden. Dadurch kann verhindert werden, dass das lokale Energieversorgungsnetz bzw. die zumindest eine Energieversorgungseinrichtung zu stark belastet werden. Die erwartete Verbrauchsleistung und der erwartete Energiebedarf eines Teilnehmers sind jene Verbrauchsleistung und jener Energiebedarf, von denen ausgegangen wird, dass sie nach Verbinden des jeweiligen Teilnehmers benötigt werden. Die erwartete Verbrauchsleistung und der erwartete Energiebedarf können beispielsweise mithilfe statistischer Daten aus einem vergangenen Zeitraum ermittelt werden oder auf Basis der angeschlossenen und aktivierten elektrischen Geräte eines Teilnehmers, wie etwa Kühlschränke, Beleuchtung, Heizungseinrichtungen etc., ermittelt werden. Beispielsweise kann ermittelt werden, dass der erwartete Energiebedarf eines Teilnehmers in den nächsten 24 Stunden bei 7 kWh liegt, wenn dies auch in den vergangenen letzten 7 Tagen im Durchschnitt der Fall war. Die erwartete Verbrauchsleistung kann durch eine statistische Aufzeichnung der Verbrauchsleistung des Teilnehmers erfolgen. Als erwartete Verbrauchsleistung kann beispielsweise die maximale oder die durchschnittliche Verbrauchsleistung der letzten 24 Stunden herangezogen werden. Für kurzfristige Zeiträume ist die erwartete Verbrauchsleistung wichtig, um die vorhandene Energie zu verteilen. Zur langfristigen Planung ist vorwiegend der erwartete Energiebedarf relevant. Wenn der erwartete Energiebedarf oder die erwartete Verbrauchsleistung eines Teilnehmers zu hoch ist, wird dieser nicht mit dem lokalen Energieversorgungsnetz verbunden. In Schritt viii) erfolgt ein bedarfsweises Trennen von Teilnehmern von dem lokalen Energieversorgungsnetz, sodass die Netzstabilität des lokalen Energieversorgungsnetzes aufrechterhalten wird. Die Trennung von Teilnehmern erfolgt beispielsweise auf Basis der tatsächlichen Verbrauchsleistung und/oder des tatsächlichen Energiebedarfs eines Teilnehmers. Es kann auch vorgesehen sein, dass Teilnehmer nach Relevanz sortiert sind und Teilnehmer niedriger Relevanz vom Energieversorgungsnetz getrennt werden, während Teilnehmer hoher Relevanz mit dem Energieversorgungsnetz verbunden bleiben. Vorzugsweise werden zuerst Teilnehmer ohne eigene Energieversorgungseinrichtung von dem lokalen Energieversorgungsnetz getrennt, bevor Teilnehmer mit Energieversorgungseinrichtung von dem lokalen Energieversorgungsnetz getrennt werden. Mit anderen Worten werden Teilnehmer mit Energieversorgungseinrichtung vorzugsweise priorisiert. Wenn der tatsächliche Energiebedarf und/oder die tatsächliche Verbrauchsleistung eines Teilnehmers zu hoch ist und die Stabilität des lokalen Energieversorgungsnetzes gefährden würde, wird der Teilnehmer durch Schalten des entsprechenden weiteren Schalters vom lokalen Energieversorgungsnetz getrennt. Bei einer Ausführungsform der Erfindung kann vorgesehen sein, dass vordefinierte elektrische Verbraucher, wie Küchengeräte oder Außenbeleuchtungen, vorzugsweise automatisch und insbesondere gemäß einer vorgegebenen Reihenfolge deaktiviert werden, wenn der tatsächliche Energiebedarf über dem erwarteten Energiebedarf und/oder die tatsächliche Verbrauchsleistung über der erwarteten Verbrauchsleistung eines Teilnehmers liegt. Die Deaktivierung der elektrischen Verbraucher kann mittels Smart-Home-Anwendung erfolgen. Es kann auch vorgesehen sein, dass Teilnehmer ohne eigene Energieversorgungseinrichtung abwechselnd, d.h. nicht gleichzeitig, vorzugsweise gemäß einer vorgegebenen Reihenfolge mit dem lokalen Energieversorgungsnetz verbunden werden, um das lokale Energieversorgungsnetz nicht zu überlasten. Die Schritte i)-viii) können, aber müssen nicht in der angegebenen Reihenfolge ausgeführt werden. Die Schritte können, soweit technisch möglich, auch gleichzeitig oder zeitlich zumindest teilweise oder vollständig überlappend ausgeführt werden. Wenn die Ursache für den Stromausfall behoben wurde und das lokale Energieversorgungsnetz von dem übergeordneten Energieversorgungsnetz wieder mit Strom versorgt werden kann, kann vorgesehen sein, dass der Master-Wechselrichter und die allfälligen Slave-Wechselrichter die Einspeisung in das lokale Energieversorgungsnetz einstellen. Anschließend kann der elektrische Schalter im Verbindungspunkt wieder schließen, sodass das lokale Energieversorgungsnetz wieder von dem übergeordneten Energieversorgungsnetz mit elektrischer Energie versorgt wird. Zuvor können auch die weiteren Schalter geöffnet worden sein.

Vorteilhaft ist, wenn in Schritt vii) die erwartete Verbrauchsleistung der Teilnehmer ohne Energieversorgungseinrichtung jeweils durch ein dem Teilnehmer zugeordnetes Verbrauchsleistungskontingent und der erwartete Energiebedarf der Teilnehmer ohne Energieversorgungseinrichtung jeweils durch ein dem Teilnehmer zugeordnetes Energiebedarfskontingent definiert wird. Das Energiebedarfskontingent und/oder das Verbrauchsleistungskontingent können bei einer Ausführungsform der Erfindung von einem Nutzer manuell eingestellt werden. Bei einer anderen Ausführungsform kann das zugeordnete Energiebedarfskontingent und/oder das zugeordnete Verbrauchsleistungskontingent durch den Energie- und Verbrauchsleistungsbedarf eines Teilnehmers in der Vergangenheit von einer Anwendung eingestellt werden. Das Verbrauchsleistungskontingent und das Energiebedarfskontingent können demnach durch statistische Methoden bestimmt werden. Es ist auch möglich, dass die zur Verfügung stehende elektrische Gesamtenergie und die abrufbare elektrische Gesamtleistung gleichmäßig oder unter Berücksichtigung der Anschlussleistung in zugeordnete Energiebedarfskontingente bzw. Verbrauchsleistungskontingente aufgeteilt werden. Bei einer Ausführungsform der Erfindung kann vorgesehen sein, dass auch Teilnehmer mit einer Energieversorgungseinrichtung ein zugeordnetes Energiebedarfskontingent und ein zugeordnetes Verbrauchsleistungskontingent erhalten. Alle Teilnehmer, deren Energiebedarf das Energiebedarfskontingent und/oder deren Verbrauchsleistung das Verbrauchsleistungskontingent überschreitet, können bei einer Ausführungsform eine Aufforderung erhalten, den Energiebedarf und/oder die Verbrauchsleistung zu reduzieren.

Um ein Zusammenbrechen der Energieversorgung zu vermeiden, können Teilnehmer ohne Energieversorgungseinrichtung mit einem tatsächlichen Energiebedarf/einer tatsächlichen Verbrauchsleistung, der/die höher ist als das zugeordnete Energiebedarfskontingent/das zugeordnete Verbrauchsleistungskontingent, in Schritt viii) vom lokalen Energieversorgungsnetz getrennt werden. Der tatsächliche Energiebedarf und die tatsächliche Verbrauchsleistung eines Teilnehmers können mithilfe von Messeinrichtungen, insbesondere Smart-Meter, gemessen werden. Dadurch wird die Versorgungssicherheit gewährleistet und die den anderen Teilnehmern zur Verfügung stehende Energie bzw. abrufbare elektrische Leistung nicht eingeschränkt.

Bei einer Ausführungsform der Erfindung kann vorgesehen sein, dass elektrische Verbraucher der Teilnehmer am lokalen Energieversorgungsnetz nach Relevanz kategorisiert werden und elektrische Verbraucher bis zu einer bestimmten Relevanzkategorie vorzugsweise automatisch deaktiviert werden. Auf diese Weise kann der Energiebedarf in dem lokalen Energieversorgungsnetz gering gehalten werden, um zu vermeiden, dass die zugeordneten Energiebedarfskontingente und Verbrauchsleistungskontingente überschritten werden. Bei einer Ausführungsform der Erfindung kann auch vorgesehen sein, dass elektrische Verbraucher, die bestimmten Relevanzkategorien zugeordnet sind, in Abhängigkeit der zur Verfügung stehenden Gesamtenergie und/oder der abrufbaren Gesamtleistung vorzugsweise automatisch deaktiviert werden. Wenn die zur Verfügung stehende Gesamtenergie und/oder die abrufbare Gesamtleistung gering ist, werden Verbraucher niedriger Relevanzkategorien deaktiviert. Wenn viel Gesamtenergie bzw. eine hohe abrufbare Gesamtleistung zur Verfügung stehen, können auch Verbraucher niedrigerer Relevanzkategorien aktiviert werden. Die Relevanzkategorien sind nach ihrer Relevanz vorzugsweise aufsteigend geordnet. Bei einer beispielhaften Ausführungsform können elektrische Verbraucher wie Kühlschränke, Heizungsanlagen und Telekommunikationsgeräte in eine höchste Relevanzkategorie eingeteilt werden. Elektrische Verbraucher wie Geschirrspüler, Spielkonsolen und Wasserumwälzpumpen für Schwimmbecken können in eine niedrigere Relevanzkategorie eingeordnet werden. Bei einer Ausführungsform der Erfindung können in Abhängigkeit von dem zugeordneten Energiebedarfskontingent und/oder dem zugeordneten Verbrauchsleistungskontingents eines Teilnehmers die elektrischen Verbraucher entsprechend der Höhe der Relevanzkategorie aktiviert bzw. deaktiviert werden. Wenn das zugeordnete Energiebedarfskontingent und/oder das zugeordnete Verbrauchsleistungskontingent gering sind, können beispielsweise nur Verbraucher der höchsten Relevanzkategorie aktiviert werden. Wenn das zugeordnete Energiebedarfskontingent und/oder das zugeordnete Verbrauchsleistungskontingent ausreichend hoch sind, können auch Verbraucher niedrigerer Relevanzkategorie aktiviert werden. Relevanzkategorien können beispielsweise festgelegt werden, wenn ein Teilnehmer einen Notstromkreis und einen Stromkreis für einen Normalbetrieb aufweist. Der Notstromkreis würde im Falle eines Stromausfalls wichtige Verbraucher versorgen, wodurch eine hohe Relevanzkategorie definiert wird. Die übrigen Verbraucher, die vom Notstromkreis nicht versorgt werden, gehören einer niedrigeren Relevanzkategorie an. Durch Umschalten auf den Notstromkreis werden die Verbraucher niedriger Relevanzkategorie deaktiviert und nur Verbraucher hoher Relevanzkategorie versorgt. Es kann aber auch vorgesehen sein, dass ein Teilnehmer eine Smart-Home-Einrichtung besitzt, die mit den Verbrauchern verbunden ist und diese in Abhängigkeit ihrer Relevanzkategorie aktivieren bzw. deaktivieren kann. Bei einer anderen Ausführungsform kann auch der Wechselrichter angeschlossene Verbraucher in Abhängigkeit ihrer Relevanzkategorie aktivieren bzw. deaktivieren. Bei einer alternativen Variante kann ein Teilnehmer vom lokalen Energieversorgungsnetz getrennt werden, wenn dieser keine Verbraucher niedriger Relevanzkategorien unterscheiden und aktivieren bzw. deaktivieren kann.

Der Verbindungspunkt kann durch einen Transformator gebildet sein oder einen Transformator aufweisen, der das lokale Energieversorgungsnetz mit dem übergeordneten Energieversorgungsnetz verbindet.

Das lokale Energieversorgungsnetz kann durch ein Niederspannungsnetz und das übergeordnete Energieversorgungsnetz durch ein Mittelspannungsnetz gebildet sein.

Bevorzugt ist, wenn die weiteren Schalter durch jeweils ein Smart-Meter gesteuert werden oder jeweils in Smart-Metern integriert sind. Ein Smart-Meter ist eine Vorrichtung, insbesondere ein Stromzähler, der Daten empfangen und senden kann und dazu in ein Kommunikationsnetz zur Fernübertragung eingebunden ist. Ein anderer Ausdruck für Smart-meter ist intelligenter Zähler.

Wenn mehrere Teilnehmer mit einer Energieversorgungseinrichtung vorhanden sind, ist es günstig, wenn als Master-Wechselrichter jener Wechselrichter bestimmt wird, der jener Energieversorgungseinrichtung zugeordnet ist, die unter allen Energieversorgungseinrichtungen der Teilnehmer zu einem Bestimmungszeitpunkt die meiste momentan zur Verfügung stehende Energie und/oder die höchste abrufbare elektrische Leistung aufweist. Der Bestimmungszeitpunkt ist bevorzugt in Schritt iii).

Um Daten auszutauschen ist es günstig, wenn zwischen dem Master-Wechselrichter, dem Schalter und den weiteren Schaltern eine Kommunikationsverbindung, vorzugsweise eine Powerline-Communication, insbesondere eine Powerline-Communication gemäß HomePlug AV-Spezifikation, IEEE 1901-2010-Standard oder G.hn-Standard, vorliegt. Weiters ist es günstig, wenn auch der zumindest eine Slave-Wechselrichter ebenfalls über die Kommunikationsverbindung mit dem Master-Wechselrichter kommunizieren kann. Alternativ zu Powerline-Communication kann auch beispielsweise WLan oder LoRa-WAN verwendet werden.

Bei einer bevorzugte Ausführungsform ist vorgesehen, dass die Energieversorgungseinrichtung einen elektrischen Energiespeicher und vorzugsweise eine Energieerzeugungseinrichtung, insbesondere eine Photovoltaik-Anlage oder ein Windrad, aufweist. Die Energieerzeugungseinrichtung kann direkt oder über den Energiespeicher mithilfe des Wechselrichters in das lokale Energieversorgungsnetz einspeisen. Als Energieerzeugungseinrichtung kann auch ein Wasserkraftwerk vorgesehen sein.

Nachfolgend wird die Erfindung anhand von Figuren näher beschrieben, auf die sie allerdings nicht beschränkt sein soll.

Es zeigen:
Fig. 1 eine schematische Darstellung eines lokalen Energieversorgungsnetzes;
Fig. 2 ein Ablaufdiagramm; und
Fig. 3 ein weiteres Ablaufdiagramm.

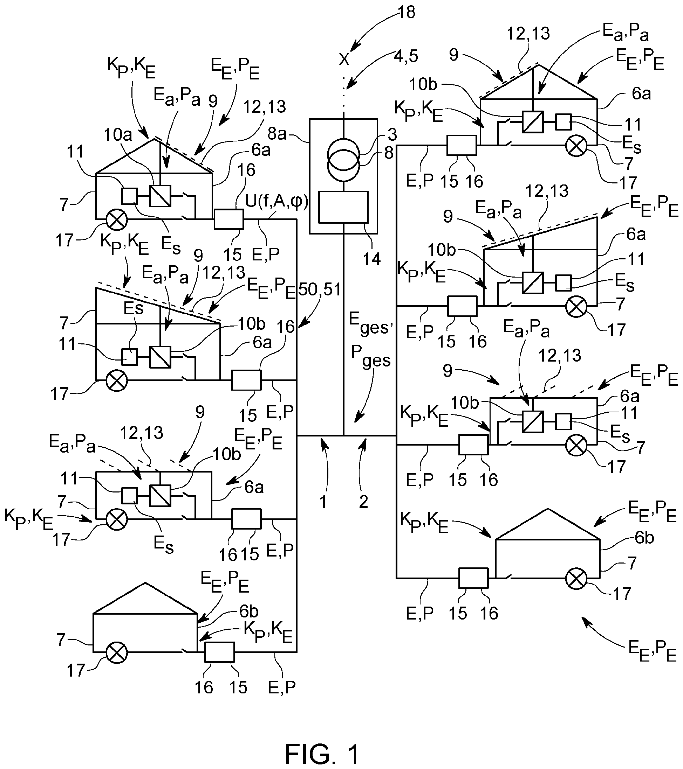

Fig. 1 zeigt ein lokales Energieversorgungsnetz 1 in Form eines Niederspannungsnetzes 2, das über einen Verbindungspunkt 3 mit einem übergeordneten Energieversorgungsnetz 4 in Form eines Mittelspannungsnetzes 5 verbunden ist. Das Niederspannungsnetz 2 ist als TN-System (frz. Terre Neutre) ausgebildet und verbindet mehrere Teilnehmer 6a, 6b elektrisch miteinander. Jeder Teilnehmer 6a, 6b weist ein eigenes Gebäude 7 auf. In der gezeigten Darstellung stellt jeder Teilnehmer einen eigenen Haushalt dar. Der Verbindungspunkt 3 weist einen Transformator 8 in einer Transformatorstation 8a auf, der die höhere Spannung des Mittelspannungsnetzes 5 (über 1000 V Außenleiterspannung) in die niedrigere Spannung des Niederspannungsnetzes 2 (400 V Außenleiterspannung) transformiert. Unter den Teilnehmern 6a, 6b existieren Teilnehmer 6a mit einer eigenen Energieversorgungseinrichtung 9 und Teilnehmer 6b ohne eine eigene solche Energieversorgungseinrichtung 9. Eine Energieversorgungseinrichtung 9 weist jeweils zumindest einen Wechselrichter 10a, 10b zur Einspeisung in das lokale Energieversorgungsnetz 1 und bevorzugt auch einen Energiespeicher 11 und/oder eine Energieerzeugungseinrichtung 12 auf. Eine Energieerzeugungseinrichtung 12 kann beispielsweise eine Photovoltaik-Anlage 13, eine Windkraftanlage oder eine Wasserkraftanlage (nicht gezeigt) aufweisen. Das lokale Energieversorgungsnetz 1 ist über zumindest einen Schalter 14 mit dem übergeordneten Energieversorgungsnetz 4 verbunden und kann mithilfe des Schalters 14 von diesem getrennt werden. Der Schalter 14 kann für jeden Außenleiter ein eigenes Schalterelement aufweisen. Der Schalter 14 kann in oder an dem Transformator 8 angeordnet sein. Jeder Teilnehmer 6a, 6b ist über einen weiteren Schalter 15 mit dem lokalen Energieversorgungsnetz 1 verbunden. Auch die weiteren Schalter 15 können jeweils Schalterelemente für jeden Außenleiter aufweisen. Die weiteren Schalter können jeweils in ein Smart Meter 16 integriert sein oder von einem Smart Meter 16 gesteuert werden. Durch die weiteren Schalter 15 können die Teilnehmer 6a, 6b mit dem lokalen Energieversorgungsnetz 1 verbunden oder von diesem getrennt werden. Jeder Teilnehmer 6a, 6b weist zumindest einen Verbraucher 17 auf, der in Fig. 1 durch ein Schaltbild einer Leuchte verdeutlicht wird. Verbraucher 17 können aber auch beispielsweise Kühlschränke oder elektronische Geräte wie Fernseher und Radio sein.

Die Wechselrichter 10a, 10b, der Schalter 14 und die weiteren Schalter 15 können über eine drahtlose oder eine drahtgebundene Kommunikationsverbindung 50 miteinander kommunizieren. Insbesondere kann eine Powerline-Communication 51 vorgesehen sein. Die Wechselrichter 10a, 10b, der Schalter 14 und die weiteren Schalter 15 können dabei über die Außenleiter des lokalen Energieversorgungsnetzes 1 miteinander kommunizieren und Daten oder Befehle austauschen.

Im Normalbetrieb können Teilnehmer 6a, deren Energieversorgungseinrichtungen 9 Energieerzeugungseinrichtungen 12 aufweisen, elektrische Überschussenergie über die Wechselrichter 10a, 10b in das lokale Energieversorgungsnetz 1 einspeisen. Bereits in diesem Zustand kann einer der Wechselrichter 10a, 10b als Master-Wechselrichter 10a festgelegt werden (siehe Schritt iii) unten). Die anderen Wechselrichter 10a, 10b stellen Slave-Wechselrichter 10b dar. Teilnehmer 6b ohne Energieversorgungseinrichtung 9 beziehen elektrische Energie aus dem lokalen Energieversorgungsnetz 1. Mithilfe der Smart Meter 16 können der tatsächliche Energiebedarf E und die tatsächliche Verbrauchsleistung P jedes Teilnehmers 6a, 6b über die Zeit statistisch erfasst und gespeichert werden. Durch die statistische Erfassung des Energiebedarfs E und der Verbrauchsleistung P der Teilnehmer 6a, 6b können statistische Prognosen über den zu erwartenden Energiebedarf E_{E} und die zu erwartende Verbrauchsleistung P_{E} eines jeden Teilnehmers 6a, 6b vorgenommen werden.

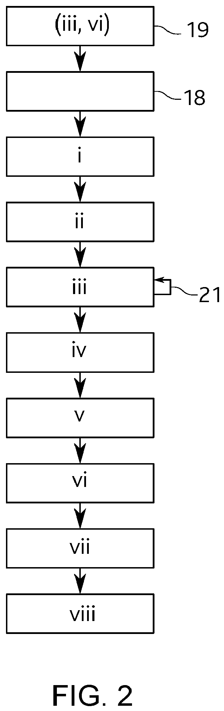

Im Falle eines Stromausfalls 18, beispielsweise in dem übergeordneten Energieversorgungsnetz 4, können die Teilnehmer 6a, 6b keine elektrische Energie mehr aus dem übergeordneten Energieversorgungsnetz 4 mehr beziehen. Um dennoch die Energieversorgung in dem lokalen Energieversorgungsnetz sicherstellen zu können, ist erfindungsgemäß ein Verfahren zur Energieversorgung vorgesehen, das bei einer bevorzugten Ausführungsform die nachfolgend beschriebenen Schritte aufweist (siehe auch Fig. 2). Die Schritte können, aber müssen nicht in der angegeben Reihenfolge vorgenommen werden. Manche Schritte können auch zumindest teilweise oder vollständig überlappend ausgeführt werden.

Zunächst findet ein Normalbetrieb 19 statt (siehe Fig. 2), bei dem Energie von dem übergeordneten Energieversorgungsnetz 4 zu den Teilnehmern 6a, 6b gelangt. Der tatsächliche Energiebedarf E und die tatsächliche Verbrauchsleistung P der Teilnehmer 6a, 6b kann mithilfe der Smart-Meter 16 gemessen werden. Während des Normalbetriebs 19 kann bereits ein Master-Wechselrichter 10a bestimmt werden (siehe Ausführungen zu Schritt iii) unten), wie durch die Bezeichnung des ersten Blocks mit iii) verdeutlicht wird. Bei einem Stromausfall 18 kann eine automatische Deaktivierung sämtlicher Wechselrichter 10a, 10b erfolgen.

In einem Schritt i) kann der Schalter 14 das lokale Energieversorgungsnetz 1 von dem übergeordneten Energieversorgungsnetz 4 elektrisch trennen. Dies kann automatisch erfolgen, wenn ein Stromausfall 18 vorliegt. Der Schalter 14 kann aber auch beispielsweise im Rahmen von Wartungsarbeiten manuell geschaltet werden, um das lokale Energieversorgungsnetz 1 von dem übergeordneten Energieversorgungsnetz 4 zu trennen.

In einem Schritt ii) werden sämtliche Teilnehmer 6a, 6b durch die weiteren Schalter 15 von dem lokalen Energieversorgungsnetz 1 getrennt.

In einem Schritt iii) (wie oben bereits in Zusammenhang mit dem Normalbetrieb erwähnt) wird ein Master-Wechselrichter 10a bestimmt. Die übrigen Wechselrichter 10b stellen Slave-Wechselrichter 10b dar. Der Master-Wechselrichter 10a kann, wie erläutert, bereits im Normalbetrieb 19 des lokalen Energieversorgungsnetzes, also bevor ein Stromausfall 18 eintritt, bestimmt werden. Als Master-Wechselrichter 10a kann manuell ein Wechselrichter 10a, 10b ausgewählt werden. Bevorzugt ist, wenn als Master-Wechselrichter 10a jener Wechselrichter 10a, 10b bestimmt wird, der der Energieversorgungseinrichtung 9 mit der höchsten zur Verfügung stehenden Energie Eₐ und/oder der höchsten abrufbaren elektrischen Leistung Pₐ angehört. In der gezeigten Ausführungsform ist die Energieversorgungseinrichtung 9 mit der höchsten zur Verfügung stehenden Energie Eₐ und/oder der höchsten abrufbaren elektrischen Leistung Pₐ jene mit einem Energiespeicher 11 mit der größten Menge an gespeicherter elektrischer Energie E_{S}. Wenn mit dem bestimmten Master-Wechselrichter 10a der Netzaufbau nicht möglich sein sollte, wird ein neuer Master-Wechselrichter 10a bestimmt, wie durch die Linie 21 verdeutlicht wird.

In Schritt iv) werden jene Teilnehmer 6a, die eine Energieversorgungseinrichtung 9 aufweisen, mit dem lokalen Energieversorgungsnetz 1 über die jeweiligen weiteren Schalter 15 verbunden, sodass eine Einspeisung des Master-Wechselrichters 10a und der Slave-Wechselrichter 10b in das lokale Energieversorgungsnetz 1 ermöglicht wird.

In Schritt v) wird eine Wechselspannung U durch den Master-Wechselrichter 10a und die Slave-Wechselrichter 10b ausgegeben, wobei die Frequenz f, Spannungshöhe A und Phasenlage ϕ der Wechselspannung U durch den Master-Wechselrichter 10a vorgegeben wird. Die Frequenz f, Spannungshöhe A und Phasenlage ϕ können den Slave-Wechselrichtern 10b über die Kommunikationsverbindung 50, insbesondere die Powerline-Communication 51, mitgeteilt werden. Die Slave-Wechselrichter 10b geben eine Wechselspannung U aus, deren Frequenz f, Spannungshöhe A und Phasenlage ϕ den Vorgaben des Master-Wechselrichters 10a entspricht. Das Zuschalten der Slave-Wechselrichter 10b kann nacheinander erfolgen, um zu überprüfen, ob diese mit einer Wechselspannung, die die vorgegebene Frequenz f, die vorgegebene Spannungshöhe A und die vorgegebene Phasenlage ϕ aufweisen. Dadurch wird ein Inselnetz errichtet, das unabhängig vom übergeordneten Energieversorgungsnetz 4 die Teilnehmer 6a, 6b versorgen kann, und zwar auch jene ohne eigene Energieversorgungseinrichtung 9.

In Schritt vi) werden die durch die Energieversorgungseinrichtung 9 in dem lokalen Energieversorgungsnetz 1 zur Verfügung stehende elektrische Gesamtenergie E_{ges} und die abrufbare elektrische Gesamtleistung P_{ges} bestimmt. Dieser Schritt kann ebenfalls beispielsweise gleichzeitig mit den Schritten i)-v) oder bereits im Normalbetrieb 19 erfolgen. Die Bestimmung der zur Verfügung stehenden Gesamtenergie E_{ges} und der abrufbaren Gesamtleistung P_{ges} kann durch eine Erfassung der in den Energiespeichern 10 der Energieversorgungseinrichtung 9 bevorrateten elektrischen Energie E_{S}, durch Erfassung der momentan durch allfällige Energieerzeugungseinrichtung 12 erzeugten Energie oder Erzeugerleistung und/oder durch Prognose der künftig durch allfällige Energieerzeugungseinrichtung 12 erzeugten Energie oder Erzeugerleistung erfolgen.

In Schritt vii) werden die Teilnehmer 6b ohne Energieversorgungseinrichtung 9 mit dem lokalen Energieversorgungsnetz 1 in Abhängigkeit der zur Verfügung stehenden Gesamtenergie E_{ges}, der abrufbaren elektrischen Gesamtleistung P_{ges}, der erwarteten Verbrauchsleistungen P_{E} der Teilnehmer 6b und/oder des erwarteten Energiebedarfs E_{E} der Teilnehmer 6b verbunden. Die erwartete Verbrauchsleistung P_{E} und der erwartete Energiebedarf E_{E} eines Teilnehmers 6b sind jene Verbrauchsleistung und jener Energiebedarf, von denen ausgegangen wird, dass sie nach Verbinden des jeweiligen Teilnehmers 6b benötigt werden. Die erwartete Verbrauchsleistung P_{E} und der erwartete Energiebedarf E_{E} können beispielsweise mithilfe statistischer Daten aus einem vergangenen Zeitraum ermittelt werden oder auf Basis der angeschlossenen und aktivierten elektrischen Verbraucher 17 eines Teilnehmers 6b, wie etwa Kühlschränke, Beleuchtung, Heizungseinrichtungen etc., ermittelt werden.

In einem Energieversorgungsnetz 1 kann nur so viel Energie verbraucht werden, wie zur Verfügung steht. Die gesamte tatsächliche Verbrauchsleistung P aller Teilnehmer 6a, 6b darf auch die abrufbare Gesamtleistung P_{ges} nicht übersteigen. Um diese Vorgaben einzuhalten, wird die erwartete Verbrauchsleistung P_{E} der Teilnehmer 6b ohne Energieversorgungseinrichtung 9 jeweils durch ein dem Teilnehmer 6b zugeordnetes Verbrauchsleistungskontingent K_{P} und der erwartete Energiebedarf der Teilnehmer 6b ohne Energieversorgungseinrichtung 9 jeweils durch ein dem Teilnehmer 6b zugeordnetes Energiebedarfskontingent K_{E} definiert. Auch den Teilnehmern 6a mit eigener Energieversorgungseinrichtung 9 kann ein Verbrauchsleistungskontigent K_{P} und ein Energiebedarfskontingent K_{E} zugeordnet werden.

Wenn ein tatsächlicher Energiebedarf E oder eine tatsächliche Verbrauchsleistung P eines Teilnehmers 6b ohne Energieversorgungseinrichtung 9 das jeweils zugeordnete Energiebedarfskontingent K_{E} bzw. das jeweils zugeordnete Verbrauchsleistungskontingent K_{P} übersteigt, kann der Teilnehmer 6b aufgefordert werden, seinen tatsächlichen Energiebedarf E bzw. seine tatsächliche Verbrauchsleistung P zu reduzieren. Wenn der Teilnehmer 6b dem nicht nachkommt, kann in Schritt viii) vorgesehen sein, dass Teilnehmer 6b ohne eigene Energieversorgungseinrichtung 9 von dem lokalen Energieversorgungsnetz 1 getrennt werden. Es kann auch vorgesehen sein, dass Teilnehmer 6a mit Energieversorgungseinrichtungen 9 priorisiert behandelt werden. Wenn ein Teilnehmer 6a mit Energieversorgungseinrichtung 9 sein Energiebedarfskontingent K_{E} oder sein Verbrauchsleistungskontingent K_{P} überschreitet, kann auch vorgesehen sein, dass ein Teilnehmer 6b ohne eigene Energieversorgungseinrichtung 9 von dem lokalen Energieversorgungsnetz 1 getrennt wird, um die Netzstabilität nicht zu gefährden.

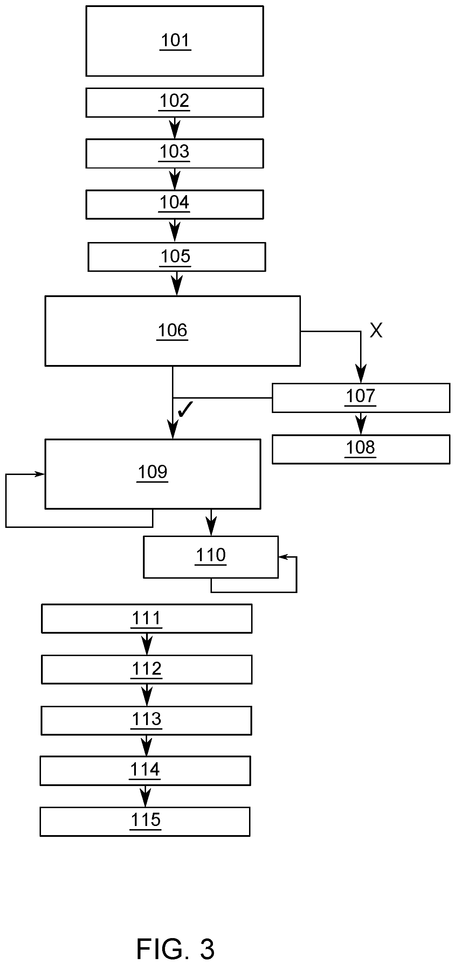

Fig. 3 zeigt den Ablauf von Fig. 2 detaillierter. Im Normalbetrieb 19 wird ein Master-Wechselrichter 10a bestimmt und die tatsächliche Verbrauchsleistung P und der tatsächliche Energiebedarf E der Teilnehmer 6a, 6b statistisch erfasst. Auch die in den Energiespeichern 11 enthaltene Energie E_{S} und die Erzeugerleistung wird erfasst (Block 101).

In Block 102 kommt es zu einem Stromausfall 18. In Block 103 werden alle Wechselrichter 10a, 10b deaktiviert. In Block 104 wird die Fehlerquelle eruiert. Wenn diese nicht im lokalen Energieversorgungsnetz 1 liegt, wird fortgefahren.

In Block 105 werden der Schalter 14 am Verbindungspunkt 3 und die weiteren Schalter 15 bei den Teilnehmern 6a, 6b geöffnet.

In Block 106 wird jener weitere Schalter 15, der dem Teilnehmer 6a, der dem Master-Wechselrichter 10a zugeordnet ist, geschlossen. Der Masterwechselrichter 10a speist daraufhin in das lokale Energieversorgungsnetz 1 mit einer Wechselspannung U mit einer Frequenz f, einer Spannungshöhe A und einer Phasenlage ϕ ein und startet den Inselbetrieb. Sollte der Netzaufbau scheitern, wird ein neuer Master-Wechselrichter 10a bestimmt (Block 107). Sollte auch dies scheitern, wird das Verfahren abgebrochen (Block 108). In Block 109 werden die weiteren Schalter 14 der anderen Teilnehmer 6a mit Wechselrichter 10a an das lokale Energieversorgungsnetz 1 geschaltet. Auch die Teilnehmer 6b ohne eigene Energieversorgungseinrichtung 9 werden in Block 109 zugeschaltet, bevorzugt, nachdem die Teilnehmer 6a mit Energieversorgungseinrichtung 9 zugeschaltet wurden. Die Zuschaltung der Teilnehmer 6b erfolgt auf Basis ihrer zugeordneten Energiebedarfskontingente K_{E} und Verbrauchsleistungskontingente K_{P}, sodass die Netzstabilität erhalten bleibt. Wenn der tatsächliche Energiebedarf E und die tatsächliche Verbrauchsleistung P eines Teilnehmers 6a, 6b das zugeordnete Energiebedarfskontingent K_{E} oder das zugeordnete Verbrauchsleistungskontingent K_{P} überschreitet, kann der Teilnehmer 6a, 6b, vorzugsweise nach einer Aufforderung, durch Öffnen des jeweiligen weiteren Schalters 15, vom lokalen Energieversorgungsnetz 1 getrennt werden, um das Netz zu stabilisieren (Block 110). Dabei kann auch eine Priorisierung der Teilnehmer 6a mit Energieversorgungseinrichtung 9 vorgenommen werden, indem bei Überschreitung des zugeordneten Energiebedarfskontingents oder des zugeordneten Verbrauchsleistungskontingent eines Teilnehmers 6a mit Energieversorgungseinrichtung ein Teilnehmer 6b ohne eigene Energieversorgungseinrichtung 9 vom lokalen Energieversorgungsnetz genommen wird.

In Block 111 wird die Behebung des Stromausfalles 18 an den Master-Wechselrichter 10a gemeldet. In Block 112 stellen alle Wechselrichter 10a, 10b ihren Betrieb ein. In Block 113 werden sämtliche weiteren Schalter 15 geöffnet. In Block 114 wird der Schalter 14 geschlossen. In Block 115 werden die weiteren Schalter 15 vorzugsweise nacheinander geschlossen.

## Patentansprüche

1. Verfahren zur Energieversorgung in einem lokalen Energieversorgungsnetz (1), insbesondere nach einem Stromausfall (18), wobei das lokale Energieversorgungsnetz (1) über einen Verbindungspunkt (3) mit einem übergeordneten Energieversorgungsnetz (4) verbindbar ist und mehrere Teilnehmer (6a, 6b), insbesondere Haushalte, miteinander verbindet, wobei zumindest einer der Teilnehmer (6a) eine Energieversorgungseinrichtung (9) mit einem Wechselrichter (10a, 10b) zur Einspeisung in das lokale Energieversorgungsnetz (1) aufweist und das Verfahren die folgenden Schritte aufweist:
i) Trennen des lokalen Energieversorgungsnetzes (1) von dem übergeordneten Energieversorgungsnetz (4) mit Hilfe eines elektrischen Schalters (14);
ii) Trennen sämtlicher Teilnehmer (6a, 6b) von dem lokalen Energieversorgungsnetz (1) mit Hilfe von weiteren Schaltern (15), die sich jeweils bei den Teilnehmern (6a, 6b) befinden;
iii) Bestimmen eines Master-Wechselrichters (10a) und zumindest eines Slave-Wechselrichters (10b) unter den Teilnehmern (6a) mit Energieversorgungseinrichtung (9), wenn mehrere Teilnehmer (6a) mit einer Energieversorgungseinrichtung (9) vorhanden sind; andernfalls Festlegen des Wechselrichters (10a) des einzigen Teilnehmers (6a) mit Energieversorgungseinrichtung (9) als Master-Wechselrichter (10a);
iv) Verbinden jener Teilnehmer (6a), die Energieversorgungseinrichtungen (9) aufweisen, mit dem lokalen Energieversorgungsnetz (1) über die jeweiligen weiteren Schalter (15), sodass eine Einspeisung des Master-Wechselrichters (10a) und, falls vorhanden, der zumindest eine Slave-Wechselrichter (10b) in das lokale Energieversorgungsnetz (1) ermöglicht wird;
v) Ausgeben einer Wechselspannung (U) durch den Master-Wechselrichter (10a) und, falls vorhanden, den zumindest einen Slave-Wechselrichter (10b), wobei die Frequenz (f), Spannungshöhe (A) und Phasenlage (ϕ) der Wechselspannung (U) durch den Master-Wechselrichter (10a) vorgegeben wird;
vi) Bestimmen der durch die zumindest eine Energieversorgungseinrichtung (9) in dem lokalen Energieversorgungsnetz (1) zur Verfügung stehende elektrische Gesamtenergie (E_{ges}) und/oder der abrufbaren elektrischen Gesamtleistung (P_{ges});
vii) Verbinden zumindest eines Teilnehmers (6b) ohne Energieversorgungseinrichtung (9) zur Netzeinspeisung mit dem lokalen Energieversorgungsnetz (1) vorzugsweise nach Schritt v) in Abhängigkeit zumindest der zur Verfügung stehenden Gesamtenergie (E_{ges}), der abrufbaren elektrischen Gesamtleistung (P_{ges}), der erwarteten Verbrauchsleistung (P_{E}) des Teilnehmers (6b) ohne Energieversorgungseinrichtung (9) und/oder des erwarteten Energiebedarfs (E_{E}) des Teilnehmers (6b) ohne Energieversorgungseinrichtung (9);
viii) Bedarfsweises Trennen von Teilnehmern (6a, 6b), insbesondere von Teilnehmern (6b) ohne Energieversorgungseinrichtung (9), von dem lokalen Energieversorgungsnetz (1), sodass die Netzstabilität des lokalen Energieversorgungsnetzes (1) aufrechterhalten wird.

2. Verfahren nach Anspruch 1, wobei in Schritt vii) die erwartete Verbrauchsleistung (P_{E}) der Teilnehmer (6b) ohne Energieversorgungseinrichtung (9) jeweils durch ein dem Teilnehmer (6b) zugeordnetes Verbrauchsleistungskontingent (K_{P}) und der erwartete Energiebedarf (E_{E}) der Teilnehmer (6b) ohne Energieversorgungseinrichtung (9) jeweils durch ein dem Teilnehmer (6b) zugeordnetes Energiebedarfskontingent (K_{E}) definiert wird.

3. Verfahren nach Anspruch 2, wobei Teilnehmer (6b) ohne Energieversorgungseinrichtung (9) mit einem tatsächlichen Energiebedarf (E)/einer tatsächlichen Verbrauchsleistung (P), der/die höher ist als das zugeordnete Energiebedarfskontingent (K_{E})/das zugeordnete Verbrauchsleistungskontingent (K_{P}), in Schritt viii) vom lokalen Energieversorgungsnetz (1) getrennt werden.

4. Verfahren nach einem der Ansprüche 1 bis 3, wobei elektrische Verbraucher (17) der Teilnehmer (6a, 6b) am lokalen Energieversorgungsnetz (1) nach Relevanz kategorisiert werden und elektrische Verbraucher (17) bis zu einer bestimmten Relevanzkategorie vorzugsweise automatisch deaktiviert werden.

5. Verfahren nach einem der Ansprüche 1 bis 4, wobei der Verbindungspunkt (3) durch einen Transformator (8) gebildet ist oder einen Transformator (8) aufweist, der das lokale Energieversorgungsnetz (1) mit dem übergeordneten Energieversorgungsnetz (4) verbindet.

6. Verfahren nach einem der Ansprüche 1 bis 5, wobei das lokale Energieversorgungsnetz (1) ein Niederspannungsnetz (2) und das übergeordnete Energieversorgungsnetz (4) ein Mittelspannungsnetz (5) ist.

7. Verfahren nach einem der Ansprüche 1 bis 6, wobei die weiteren Schalter (15) durch jeweils ein Smart-Meter (16) gesteuert werden oder jeweils in Smart-Metern (16) integriert sind.

8. Verfahren nach einem der Ansprüche 1 bis 7, wobei, wenn mehrere Teilnehmer (6a) mit einer Energieversorgungseinrichtung (9) vorhanden sind, als Master-Wechselrichter (10a) jener Wechselrichter (10a) bestimmt wird, der jener Energieversorgungseinrichtung (9) zugeordnet ist, die unter allen Energieversorgungseinrichtungen (9) der Teilnehmer (6a) zu einem Bestimmungszeitpunkt die meiste momentan zur Verfügung stehende Energie (Eₐ) aufweist und/oder die höchste abrufbare elektrische Leistung (Pₐ) zur Verfügung stellt.

9. Verfahren nach einem der Ansprüche 1 bis 8, wobei zwischen dem Master-Wechselrichter (10a), dem Schalter (14) und den weiteren Schaltern (15) eine Kommunikationsverbindung (50), vorzugsweise eine Powerline-Communication (51), vorliegt.

10. Verfahren nach einem der Ansprüche 1 bis 9, wobei die Energieversorgungseinrichtung (1) einen elektrischen Energiespeicher (11) und vorzugsweise eine Energieerzeugungseinrichtung (12), insbesondere eine Photovoltaik-Anlage (13) oder ein Windrad, aufweist.
